# EUROPEAN PATENT APPLICATION

(11) **EP 4 764 925 A1**
(43) Date of publication of application: **24.06.2026**
(21) Application number: 25225989.0
(22) Date of filing: 19.12.2025
(51) Int. Cl.: G06F 21/60, G06F 21/72

(54) **ENCRYPTION/DECRYPTION UNIT**

(30) Priority: 23.12.2024 FR 2415197
(71) Applicant: STMicroelectronics International N.V., 1228 Plan-les-Ouates, Geneva (CH)
(72) Inventor: CHEVAL, Eloise, 72100 LE MANS (FR)
(74) Representative: Cabinet Beaumont

(57) **Abstract**

The present description concerns an encryption/decryption unit (120), implementing an encryption/decryption algorithm, and comprising a control unit (350):
- dedicated to the encryption/decryption unit; and
- configured to deny access, by a bus (162, 170, 172, 174) external to the encryption/decryption unit, during data decryption and encryption operations, to the content of memory elements (206, 208) used to store data decrypted by the encryption/decryption unit (120).

## Description

### Technical field

The present disclosure generally concerns decryption/encryption units and associated operating methods.

### Prior art

Encryption and decryption operations are crucial to ensure the security of data, such as for example during the downloading of updates into microcontrollers or microprocessors.

### Summary of the invention

There is a need to improve security during encryption and decryption operations, particularly within microcontrollers or microprocessors.

An embodiment overcomes all or part of the disadvantages of known decryption/encryption units.

An embodiment provides an encryption/decryption unit, implementing an encryption/decryption algorithm, and comprising a control unit:
- dedicated to the encryption/decryption unit; and
- configured to deny access, by a bus external to the encryption/decryption unit, during data decryption and encryption operations, to the content of memory elements used to store data decrypted by the encryption/decryption unit.

Another embodiment provides an operating method of an encryption/decryption unit implementing an encryption/decryption algorithm, the method comprising the denial of access, by a bus external to the encryption/decryption unit, during data decryption and encryption operations, to the content of memory elements used to store portions of data decrypted by the encryption/decryption unit;
the access denial being implemented by a control unit dedicated to the encryption/decryption unit.

According to an embodiment, the control unit is configured to implement a transfer of said decrypted data between a first memory element and a second memory element during said data decryption and encryption operations.

According to an embodiment, the encryption/decryption unit comprises a decryption unit configured to decrypt, with said algorithm, blocks of first data,
the decrypted blocks being stored in the first memory element.

According to an embodiment, said transfer is performed block by block or set of blocks by set of blocks.

According to an embodiment, said transfer is performed by using a bit stream.

According to an embodiment, the encryption/decryption unit comprises an encryption unit configured to encrypt, with said algorithm, all or part of the data contained in the second memory element.

According to an embodiment:
- the decryption unit uses, for the decryption, a first encryption and decryption key; and
- the encryption unit uses, for the encryption, a second encryption and decryption key, different from the first key.

According to an embodiment, the decryption unit and the encryption unit are part of the same computing unit configured to be parameterized by the control unit so that, in a first parameterizing mode, the computing unit implements the decryption unit, and that, in a second parameterizing mode, the computing unit implements the encryption unit.

According to an embodiment, the encryption/decryption unit comprises a third and a fourth secure memory elements, accessible by the control unit only.

According to an embodiment:
- the third memory element comprises first parameters intended to be used by the control unit to parameterize the computing unit with the first parameterizing mode; and
- the fourth memory element comprises second parameters intended to be used by the control unit to parameterize the computing unit with the second parameterizing mode.

According to an embodiment, the control unit is configured to, at each iteration of the algorithm:
- parameterize the computing unit with said first parameters so that data portions are decrypted and stored in the first memory element;
- then transfer these decrypted data portions from the first memory element to the second memory element; then
- update the first parameters;
- parameterize the computing unit with said second parameters so that the decrypted data portions stored in the second memory element are encrypted; then
- update the second parameters.

According to an embodiment, said first and second parameters each comprise an identifier of the current round of the algorithm and a round key associated with said current round.

According to an embodiment, said algorithm is an algorithm of AES, RSA, ECC type, a symmetric or asymmetric key, SM4, GOST R 34.12-2015 algorithm, or a stream cipher algorithm.

According to an embodiment, the control unit is entirely formed of hardware circuitry.

According to an embodiment, the control unit is formed of an isolated computing unit and program.

According to an embodiment, the encryption/decryption unit is securely accessible.

According to an embodiment, the control unit is securely accessible.

According to an embodiment, the blocks implemented by the algorithm have a size of 64 or 128 bits.

According to an embodiment, the encryption/decryption unit is implemented in a secure area of the ARM^{®} environment.

According to an embodiment, the first data are stored in a non-volatile memory.

According to an embodiment, the data encrypted by the encryption unit are stored in a non-volatile memory.

According to an embodiment, said bus is coupled to a microprocessor, external to the encryption/decryption unit, for example via one or more control registers.

According to an embodiment, outside said decryption and encryption operations, the access, by said bus, to the content of said memory elements used to store data decrypted by the encryption/decryption unit, is authorized.

According to an embodiment, the encryption/decryption unit is coupled to a microprocessor, external to the encryption/decryption unit and having said bus coupled thereto.

According to an embodiment, the encryption/decryption unit is coupled to a bus master, external to the encryption/decryption unit and having said bus coupled thereto.

According to an embodiment, the encryption/decryption unit is arranged in a microcontroller comprising a microprocessor, external to the encryption/decryption unit and having said bus coupled thereto.

According to an embodiment, the encryption/decryption unit is coupled to a microprocessor, external to the encryption/decryption unit and having said bus coupled thereto, for example, via one or more control registers.

According to an embodiment, the encryption/decryption unit is arranged in a microprocessor and coupled to a bus master, external to the encryption/decryption unit, and having said bus coupled thereto.

An embodiment provides a microcontroller comprising the encryption/decryption unit such as described hereabove.

An embodiment provides a microprocessor comprising the encryption/decryption unit such as described hereabove.

### Brief description of the drawings

The foregoing features and advantages, as well as others, will be described in detail in the rest of the disclosure of specific embodiments given as an illustration and not limitation with reference to the accompanying drawings, in which:
Figure 1 very schematically illustrates a microcontroller to which the embodiments apply;
Figure 2 very schematically illustrates an example of a circuit of the microcontroller of Figure 1;
Figure 3 very schematically illustrates an example of a circuit of the microcontroller of Figure 1 according to an embodiment;
Figure 4 very schematically illustrates an example of a circuit of the microcontroller of Figure 1 according to an embodiment; and
Figure 5 shows an example of a method of operation of the example of Figure 4.

### Description of embodiments

Like features have been designated by like references in the various figures. In particular, the structural and/or functional features that are common among the various embodiments may have the same references and may dispose identical structural, dimensional and material properties.

For the sake of clarity, only those steps and elements that are useful for understanding the described embodiments have been shown and are described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following description, where reference is made to absolute position qualifiers, such as the terms "front", "back", "top", "bottom", "left", "right", etc., or relative position qualifiers, such as the terms "top", "bottom", "upper", "lower", etc., or orientation qualifiers, such as "horizontal", "vertical", etc., reference is made unless otherwise specified to the orientation of the drawings.

Unless specified otherwise, the expressions "about", "approximately", "substantially", and "in the order of" signify plus or minus 10%, preferably of plus or minus 5%.

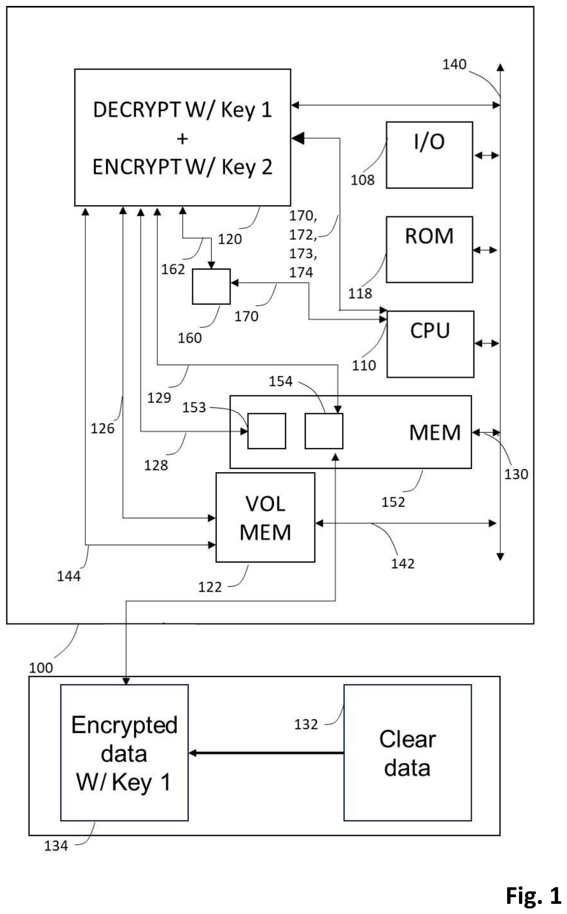

Figure 1 very schematically illustrates a microcontroller or microprocessor 100 to which the described embodiments apply.

In the shown example, microcontroller 100 comprises a memory 152 (MEM), for example non-volatile, for example of FLASH or phase-change memory (PCM) type, or for example volatile, such as of RAM (Random Access Memory) type, capable of communicating, via a communication bus, with a memory interface, not shown, configured to write or read data into and from memory 152. In an example, memory 152 is an unprotected memory.

Microcontroller 100 further comprises, for example, a processing unit 110 (CPU), comprising one or more processors under control of instructions stored in an instruction memory, not shown.

Processing unit 110 and the instruction memory communicate, for example, via a system (data, address, and control) bus 140. Memory 152 is coupled to system bus 140 or to processing unit 110, for example via a memory interface, not shown, and/or via intermediate buses 130. Microcontroller 100 further comprises, for example, an input/output (I/O) interface 108 coupled, for example, to system bus 140 to communicate with the outside.

Microcontroller 100 may incorporate other circuits implementing other functions (for example, one or more volatile and/or non-volatile memories, or other processing units). Among these other circuits, microcontroller 100 comprises, for example, a read-only or static memory 118 (ROM).

Microcontroller 100 further comprises, for example, a volatile memory 122 (VOL MEM), for example of RAM type, coupled, for example, to bus 140 and/or to processing unit 110 via an intermediate bus 142.

Microcontroller 100 further comprises an encryption/decryption unit 120 (DECRYPT W/ Key 1+ ENCRYPT W/ Key 2). The term "encryption/decryption unit" designate a computing or processing unit, or an encryption and decryption engine, capable of implementing data encryption and decryption. Processing unit 110 uses, for example, a first encryption key Key 1, known, for example, to microcontroller 100 and to the manufacturer. Processing unit 110 for example also uses a second encryption key Key 2, known for example only to microcontroller 100. Keys Key 1, Key 2 are for example provisioned for in one or more one-time programmable memories (OTPs), not shown, of microcontroller 100. These keys are then for example copied back into volatile memory 122.

Encryption/decryption unit 120 is, for example, formed of a decryption unit dedicated to decryption and of an encryption unit dedicated to encryption. Encryption/decryption unit 120 uses an algorithm to perform data encryption or decryption operations. This algorithm is, for example, an asymmetrical algorithm such as RSA, ECC, or using a symmetric or asymmetric key, or a block algorithm AES, SM4, and GOST R 34.12-2015, or a stream encryption algorithm.

An encryption/decryption, for example a block encryption/decryption, is formed of two paired algorithms, one for encryption and the other for decryption. Both algorithms accept two inputs: an input block having a size, for example, n = 128 bits and a key having a size of 128, 192, or 256 bits; and both provide an n-bit output block. The decryption algorithm is defined as being the function inverse to encryption.

In an example, the encryption and decryption algorithm used, for example a block algorithm, is said to be "in rounds", or also as a symmetric encryption/decryption algorithm in rounds. The symmetric encryption and decryption algorithm in rounds generally enables to transform a message formed of a plaintext data item with one of secret keys Key 1, Key 2, in order to obtain an encrypted data item. The encryption and the decryption are processed by blocks, or sets, of bits of the data item to be encrypted/decrypted.

The execution of this encryption and decryption algorithm is, for example, an encryption process or iterative processing. This iterative processing consists in applying, to the plaintext data item and to key Key 1 (or Key 2), one or more successive mathematical and/or logical operations, for a plurality of rounds. As an example, these operations are applied for a number N of rounds.

The encryption and decryption algorithm may, for example, begin with an optional initialization step, enabling to prepare the data item and the key for the following steps. As an example, the initialization step may be a first step of masking of the data item to be encrypted.

At each round, it is started by calculating or generating a sub-key, otherwise known as a round key, from secret key Key 1 (respectively Key 2) or the sub-key of the previous round. The set of mathematical and/or logical operations applied at each round to the key or sub-key is called key path. Then, this sub-key is used to transform or encrypt the data item.

To encrypt the data item, a set of mathematical and/or logical operations are applied to the data item, or to the encrypted data item of the previous round, at each round, by using key Key 1 (respectively Key 2), or the sub-key. The set of mathematical and/or logical operations applied at each round to the data item, or to the encrypted data item, is called data path. The set formed by the key path and the data path is then referred to as the round function of the encryption and decryption algorithm.

One thus obtains, at the end of a round, a data item encrypted with the sub-key. This encrypted data item is then re-injected into the processing or encryption process, thus acting, at the next round, as an input data item for the application of the next round function. Similarly, each new sub-key is, at the end of a round, re-injected to enable to generate the sub-key of the next round.

At the end of the number N of rounds, the encrypted data item obtained by the last application of the round function forms the final encrypted data item.

In other words, the encryption algorithm or process for example successively comprises:
- an initialization step;
- a first round, during which the round function is applied to the data item and to key Key 1 (respectively Key 2);
- a number of intermediate rounds (N-2 rounds, for example), for each of which a new sub-key is calculated, and during which the round function is applied to the encrypted data item and to the sub-key resulting from the application of the function at the previous round; and
- a final round, at the end of which the processing of the last encrypted data item, by a final application of the round function, results in obtaining the final encrypted data item.

The number N of rounds is also called number of iterations. This number N of rounds generally depends on the encryption algorithm used, and on the size of the secret key Key 1 (respectively Key 2).

The round function, applied to each round, is for example formed of substitution, row shift, and column shuffle operations followed by a combination (for example, an exclusive OR) with the sub-key of the considered round. This round function typically aims at obtaining an algorithm having with properties of confusion (that is, the most complex possible relationship between the secret key and the plaintext message) and of diffusion (that is, a dissipation, in the statistics of the encrypted message, of a statistical redundancy of the plaintext message). The algorithm may also comprise secondary masking operations enabling to add a level of protection to the data item to be encrypted during the application of the round function.

The algorithm used is, for example, a decryption and encryption algorithm of AES (for example with a GCM, ECB, CTR, CCM, CBC, or other mode), RSA, ECC type, a symmetric or asymmetric key, SM4, GOST R 34.12-2015 algorithm, or a stream cipher algorithm, or also comprise hash-type functions.

Encryption/decryption unit 120 is for example coupled to bus 140.

In the shown example, encryption/decryption unit 120 is for example coupled to processing unit 110 via one or more control registers 160. In an example, an intermediate bus 162 couples control register(s) 160 to encryption/decryption unit 120. In an example, another intermediate bus 170 couples control register(s) 160 to processing unit 110. The content of control registers 160 for example enables, for a SAES (Secured AES) accelerator, to select the origin of the key (internal to the microcontroller or given by the user), indicate the number of padding bytes for the last block, select the size of the key, enable DMA coupling at the input and/or at the output, select the current mode (encryption, decryption, or key derivation), select the AES chaining mode (ECB, CBC, GCM, CCM, ...), change the current phase (initialization phase, header phase, payload phase, or final phase). In an example, encryption/decryption unit 120 is also directly coupled to processing unit 110 via bus(es) 170, 172, 173, 174.

Processing unit 110 has for example access to control registers 160 as well as to certain registers of encryption/decryption unit 120 to initiate encryption or decryption phases implemented by encryption/decryption unit 120. In an example, processing unit 110 may have access to other registers originating from encryption/decryption unit 120 (status, Data in, Data out, Key registers, IV registers, etc.).

In the shown example, encryption/decryption unit 120 is coupled to a memory, for example memory 152 and/or memory 122. More particularly, encryption/decryption unit 120 is coupled to memory locations or elements 153, 154, of memory 152 respectively via buses 128 and 129. Memory location 154 is for example dedicated to the storage of encrypted data, for example, a program to be downloaded, together with the encryption/decryption algorithm and key Key 1, originating from outside microcontroller 100. Memory location 153 is for example dedicated to the storage of encrypted data, with the encryption/decryption algorithm and key Key 2, originating from encryption/decryption unit 120.

In the shown example, microcontroller 100 is configured to receive encrypted data, for example for an update download operation, from a memory location 134 (Encrypted data W/Key 1), external to microcontroller 100, for example located at the manufacturer of microcontroller 100. Memory location 134 is configured, for example, to store encrypted data obtained after the encryption of plaintext data stored in a memory location 132 (CLEAR DATA). The algorithm used to encrypt the data stored in memory space 132 is the same encryption/decryption algorithm as that used by encryption/decryption unit 120 and uses, for example, key Key 1.

In an example, encryption/decryption unit 120 is coupled to volatile memory 122, for example with buses 126, 144. Volatile memory 122 for example enables to temporarily store the data, in plain text, such as decrypted by encryption/decryption unit 120, before they are encrypted again by encryption/decryption unit 120 with key Key 2.

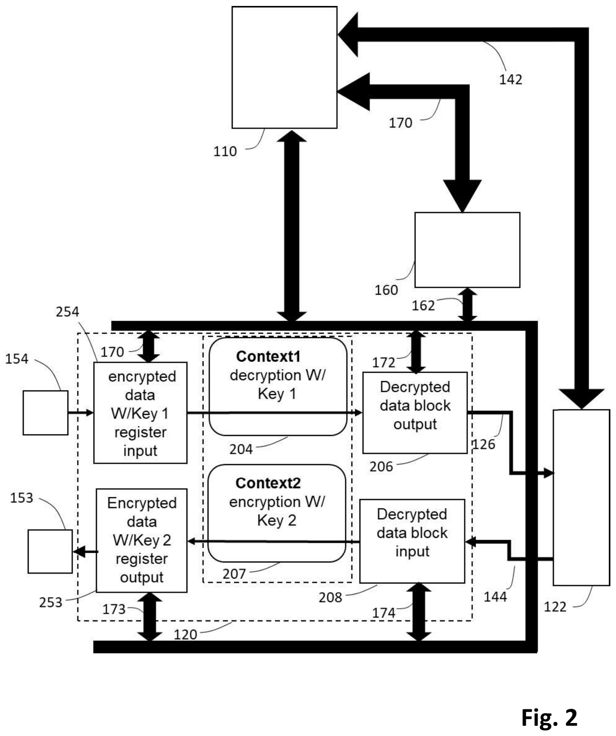

Figure 2 very schematically illustrates an example of a circuit of the microcontroller or microprocessor 100 of Figure 1. More particularly, Figure 2 illustrates an example of implementation of encryption/decryption unit 120.

In the shown example, encryption/decryption unit 120 comprises a first memory element 254 (encrypted data W/Key 1 register input) as well as a second memory element 253 (encrypted data W/Key 2 register output). Memory elements 253 and 254 are, for example, registers or buffers.

Memory element 254 is configured to receive, for example via bus 129, data encrypted with the encryption/decryption algorithm using key Key 1, which are initially present in memory element 154. Memory element 253 is configured, for example, to receive encrypted data originating from the data encryption with key Key 2. The data transiting through memory element 253 are then for example stored in memory location 153, for example via bus 128.

In the shown example, encryption/decryption unit 120 comprises a decryption unit 204 (Context1 decryption W/Key 1). Decryption unit 204 is, for example, a computing or processing unit dedicated to decryption, or a computing or processing unit configured to perform a decryption or an encryption according to a given parameterizing. Decryption unit 204 is for example configured to perform a decryption, for example by using a block algorithm, and key Key 1.

Unit 204 and unit 207 are parameterized with parameters ("context") comprising elements that need to be saved or restored to restart the stopped encryption or decryption process in a subsequent step.

In an example where the algorithm is of AES type, these parameters each comprise an identifier of the current round of the algorithm and a key associated with said current round. In an example where the algorithm is of AES GCM type, the first and second parameters also comprise parameters "IV", "count" or also the result of the calculation of the previous last block called "GF2Mul".

Decryption unit 204 is coupled to memory element 254 (encrypted data W/Key 1 register input). The data encrypted with key Key 1, for example by the manufacturer, are received by microcontroller 100 via memory element 154, for example with an update protocol, and stored in memory element 254. The encrypted data contained in memory element 254 are then decrypted, for example block by block, for example as a result of instructions from processing unit 110 and/or of the configuration of control registers 160, by decryption unit 204 and stored in a memory element 206 (Decrypted data block output) of encryption/decryption unit 120. Memory element 206 is, for example, a register or a buffer.

Memory element 206 is coupled, for example, to memory 122 via bus 126. The decrypted, that is, plaintext, data are temporarily stored in memory 122

Encryption/decryption unit 120 further comprises another memory element 208 (Decrypted data block input), for example, a register or buffer, which is coupled to memory 122 via an intermediate bus 144, for example. The plaintext data are transferred from memory 122 to memory element 208 before being erased from memory 122.

Encryption unit 207 (Context2 encryption W/Key 2) is coupled to memory element 208. Encryption unit 207 is, for example, a computing or processing unit or a computing engine, dedicated to encryption. Encryption unit 207 is, for example, configured to perform an encryption by using the block encryption and decryption algorithm used by decryption unit 204, but this time with the second secret key Key 2.

The encryption unit 207 is for example coupled to the memory element 253 (Encrypted data W/Key 2 register output) having the data encrypted by encryption unit 207 stored therein.

Memory element 254 is for example coupled to processing unit 110 and/or to control registers 160 via intermediate bus 170.

Memory element 253 is for example coupled to processing unit 110 and/or to control registers 160 via intermediate bus 173.

Memory element 206 is for example coupled to processing unit 110 and/or to control registers 160 via intermediate bus 172.

Memory element 208 is for example coupled to processing unit 110 and/or to control registers 160 via intermediate bus 174.

In an example, data transfers between memory element 254 and decryption unit 204, as well as between encryption unit 207 and memory element 253, are performed block by block, for example of the size of the blocks used in the encryption/decryption algorithm. Other types of transfer may be implemented, such as a bit stream.

Other bus master circuits, such as direct memory access (DMA) circuits, not shown, may be coupled to memory 122 or to memory elements 254, 206, 208, and 253.

The fact, in the example of Figure 2, for the decrypted data to be momentarily stored in plain text in memory 122, gives potential access by processing unit 110, or by other bus master circuits, to these sensitive data.

Even if memory 122 is protected by complex access processes, such as those implemented in the ARM^{©} Trustzone architecture, it is not possible to ensure that no attack will eventually compromise the data stored in plain text, even temporarily, in memory 122.

To overcome these problems, the described embodiments implement an encryption/decryption unit, using an encryption/decryption algorithm, and comprising a control unit:
- dedicated to the encryption/decryption unit; and
- configured to deny access, by a bus external to the encryption/decryption unit, during data decryption and encryption operations, to the content of memory elements used to store data decrypted by the encryption/decryption unit.

The decrypted data are thus no longer stored in volatile memory 122, which enables to avoid a potential attack to steal sensitive plaintext data.

The decrypted data are thus no longer accessible until they are encrypted again. Memory elements 206, 208 are thus completely isolated from processing unit 110, and more generally from any bus master, when the data are in plain text, that is, when the decryption/encryption process is in progress ("chained").

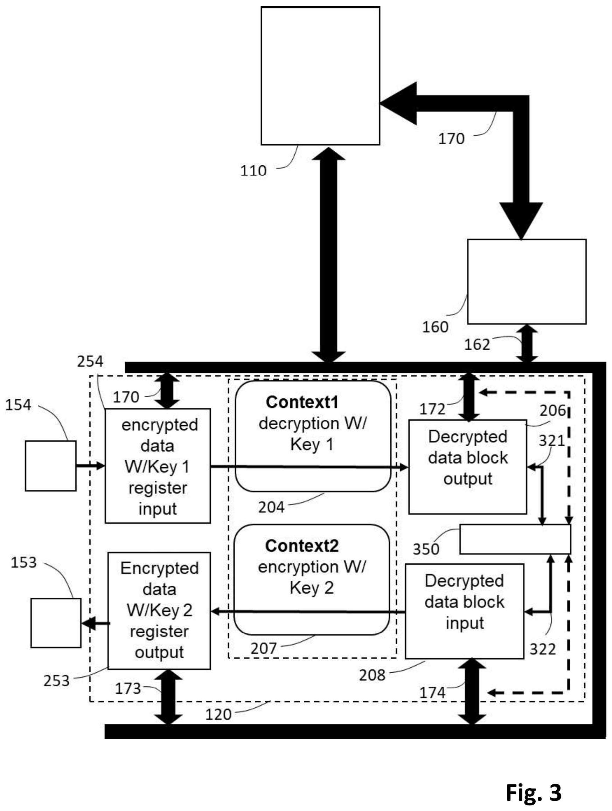

Figure 3 very schematically illustrates an example of a circuit of the microcontroller of Figure 1 according to an embodiment. More particularly, the example of Figure 3 illustrates an embodiment of encryption/decryption unit 120.

The example of Figure 3 is similar to that of Figure 2, except that the data decrypted by decryption unit 204, and present in memory element 206 during the decryption/encryption process, are no longer stored, even temporarily, in memory 122. The memory elements 206 and 208 of Figure 3 are thus not coupled to memory 122 via buses 126 and 144.

The encryption/decryption unit 120 of Figure 3 further comprises a control unit 350. Control unit 350 is coupled, for example, to memory elements 206 and 208 via respective intermediate buses 321, 322. In an example, buses 321, 322 are dedicated to control unit 350 and to memory elements 206 and 208. In other words, buses 321, 322 are not accessible to bus masters external to encryption/decryption unit 120.

In an example, control unit 350 is for example dedicated to encryption/decryption unit 120. In other words, control unit 350 is, for example, not accessible by a bus master external to encryption/decryption unit 120, or at least not accessible by bus masters during decryption and encryption operations.

Control unit 350 is for example configured to deny access (dotted lines between control unit 350 and buses 172 and 174), by buses, or equivalently by their bus masters, for example buses 162, 170, external to encryption/decryption unit 120, during decryption and encryption operations, to the contents of memory elements 206, 208.

In other words, once the operations of decryption by unit 204 have been initialized, control unit 350 denies access to memory elements 206 and 208. In other words, when units 204 and/or 207 are being executed, that is, are in chained mode, control unit 350 denies access to memory elements 206 and 208 until the decryption and encryption processes have been completed. For example, in the case of an AES GCM algorithm, a tag is provided to indicate an authentication.

Apart from the decryption and encryption operations implemented by encryption/decryption unit 120, bus masters, for example via buses 162, 170, 172, 173, 174, may have access to one or more of memory elements 206, 208, 253, and 254.

In an example, control register(s) 160 remain accessible to processing unit 110, for example, or to bus masters, including during decryption and encryption operations implemented by encryption/decryption unit 120.

In the shown example, memory elements 206, 208, 253, and 254 may be registers that can contain one word, or one block, of data, or a buffer circuit that can contain a plurality of words, or a plurality of blocks, of data.

In an example, control unit 350 is configured to implement a transfer of decrypted data contained in memory element 206 to memory element 208, for example during data decryption and encryption operations. This transfer for example takes place, block by block, or word by word, or in a bit stream. The transfer may also be initiated when one of memory elements 206, 208 is full, or when it reaches a predetermined or programmable threshold. In another example, the transfer is initiated a time counter expires to signify that the bit stream is over.

In an example, the transfer also comprises the transfer of the blocks or of the bit stream from unit 204 to unit 207 through memory element 206 and memory element 208.

In another example, the transfer also comprises the transfer of blocks or of the bit stream from memory element 208 to unit 207.

In an example, control unit 350 is entirely formed of a hardware circuit.

In another example, control unit 350 is formed of a computing unit and of a program, isolated in the sense of the ARM^{®} environment, for example.

In an example, control unit 350 is securely accessible.

In an example, the encryption/decryption unit 120 of Figure 3 is implemented in a secure area of an ARM^{®} environment.

The example of Figure 3 enables to avoid for plaintext sensitive data to be outside encryption/decryption unit 120 before their encryption with key Key 2.

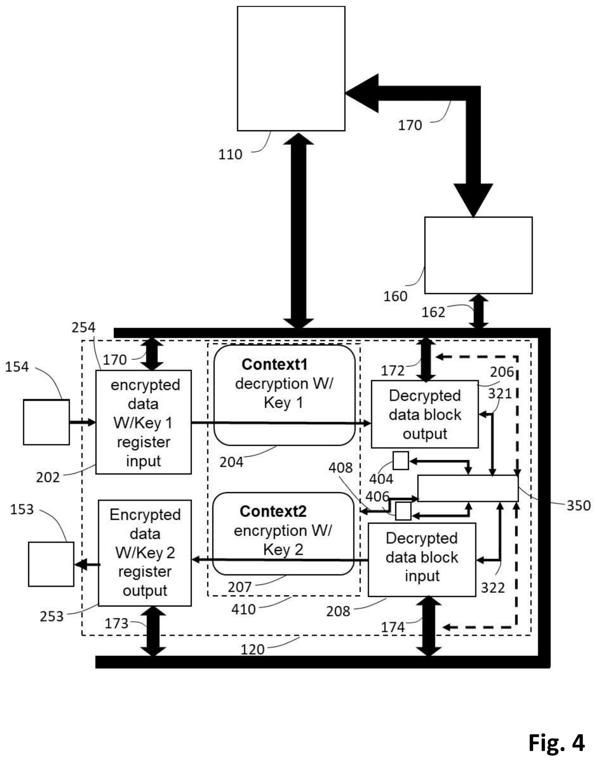

Figure 4 very schematically illustrates an example of a circuit of the microcontroller of Figure 1 according to an embodiment. More particularly, the example of Figure 3 illustrates an embodiment of encryption/decryption unit 120.

The shown example is similar to that of Figure 3, except that encryption/decryption unit 120 is this time formed of a single computing unit 410 which, according to a parameterizing applied by control unit 350, acts either as encryption unit 204 or as decryption unit 207.

In other words, in the example of Figure 4, decryption unit 204 and encryption unit 207 are part of a single computing unit 410 parameterizable by control unit 350 so that, in a first parameterizing mode, computing unit 410 implements an operation similar or identical to that of the decryption unit 204 of Figure 3, and that, in a second parameterizing mode, computing unit 410 implements an operation similar or identical to that of encryption unit 207.

In the example of Figure 4, encryption/decryption unit 120 comprises two other memory elements 404, 406, which are, for example, secure and accessible by control unit 350 only. Memory elements 404, 406 are, for example, buffers, registers, or protected memory spaces.

In the example of Figure 4, memory element 404 is configured to store first parameters intended to be used by control unit 350 to parameterize computing unit 410 with the first parameterizing mode. Memory element 406 comprises second parameters intended to be used by control unit 350 to parameterize computing unit 410 with the second parameterizing mode.

In an example, the first and second parameters comprise elements which need to be saved or restored to restart the stopped encryption or decryption process in a subsequent step.

In an example, the first and second parameters are updated at each round of an algorithm, whether in encryption or decryption.

In an example where the algorithm is of AES type, the first and second parameters each comprise an identifier of the current round of the algorithm and a key associated with said current round. In an example where the algorithm is of AES GCM type, the first and second parameters also comprise parameters "IV", "count", or the result of the calculation of the previous last block called "GF2Mul".

In the example of Figure 4, control unit 350 is coupled to computing unit 410 via a bus 408 for the parameterizing of the computing unit.

The example of Figure 4 enables to decrease by half the chip size required for encryption and decryption as compared with the example of Figure 3, which uses two units, each dedicated to a task, that is, decryption for unit 204 and encryption for unit 207. Thus, in the example of Figure 4, unit 410 is, for a first block or for a first bit stream, in a decryption mode, and once this first block has been decrypted, unit 410 is parameterized to be in an encryption mode. This cycle is repeated until all blocks have been processed.

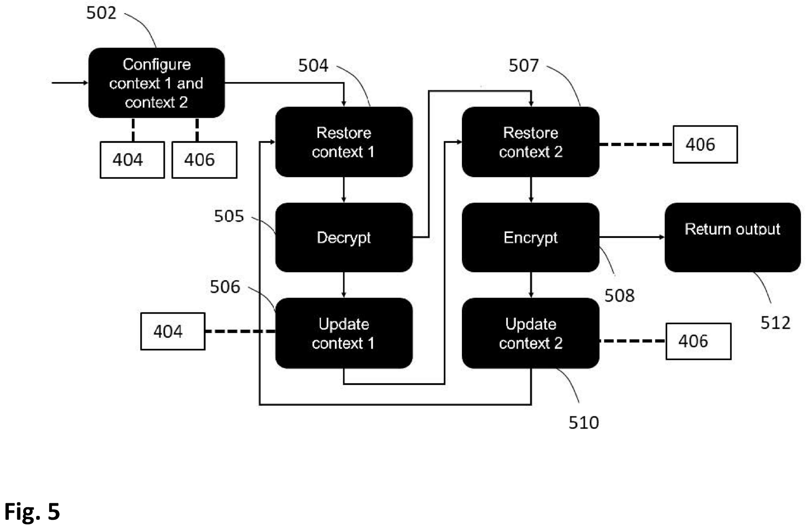

Figure 5 shows an example of an operating method of the example of Figure 4.

At a step 502 (Configure context 1 and context 2), during the initialization of unit 410, in order to process a first block, the parameters required for the configuration of unit 410 are respectively stored in memory elements 404 and 406.

At a step 504 (Restore context 1), subsequent to step 502, the parameters originating from memory element 404 are used by control unit 350 to parameterize unit 410 in the first parameterizing mode, that is, in decryption mode.

At a step 505 (Decrypt), for example subsequent to step 504, the block present in memory element 254 is decrypted by unit 410 parameterized in the first parameterizing mode and with key Key 1.

At a step 506 (Update context 1), for example subsequent to step 505, the parameters stored in memory element 404 are updated. An indicator of the round number of the algorithm, as well as the round key, are thus for example incremented or modified. This update is carried out, for example, by control unit 350. In the case where the processed block is the last one, then step 506 is not carried out after step 505, but the process goes directly to a step 507 (Restore context 2).

At step 507, for example subsequent to step 506, the parameters stored in memory element 406 are used by control unit 350 to parameterize unit 410 in the second parameterizing mode, that is, in encryption mode.

At a step 508 (Encrypt), for example subsequent to step 507, the block present in memory element 208 is encrypted by unit 410 parameterized in the second parameterizing mode with key Key 2. In the case where the processed block is the last one, then a step 512 (return output) is carried out, otherwise a step 510 (update context 2) is implemented.

At step 510, the parameters stored in memory element 406 are updated. An indicator of the round number of the algorithm, as well as the round key, are thus for example incremented or modified. This update is performed, for example, by control unit 350. If the processed block is not the last one, then the next implemented step is step 504, and steps 505, 506, 507, 508, and 510 are chained until the last block is processed. In the case of the last processed block, step 507 directly follows step 505 and step 512 directly follows step 508.

At step 512, when the last block has been encrypted at step 508, an authentication indicator is returned (called "tag" when the algorithm is AES GCM)

In an example, a CCF (Computation Complete Flag) is a bit originating from an ISR (Interrupt Status Register) which switches to 1 when an encryption or decryption operation is complete. This bit can be used as an indicator of the end of an encryption or of a decryption.

Various embodiments and variants have been described. Those skilled in the art will understand that certain features of these various embodiments and variants may be combined, and other variants will occur to those skilled in the art. In particular, the described methods can be applied to the installation or the update of encrypted programs or to any action or program requiring a decryption followed by an encryption.

Finally, the practical implementation of the described embodiments and variants is within the abilities of those skilled in the art based on the functional indications given hereabove. In particular, those skilled in the art will be capable of implementing any architecture enabling to deny access, by a bus external to encryption/decryption unit 120, during data decryption and encryption operations, to the content of memory elements 206, 208 used to store data decrypted by encryption/decryption unit 120.

## Claims

1. Encryption/decryption unit (120), implementing an encryption/decryption algorithm, and comprising a control unit (350):
- dedicated to the encryption/decryption unit; and
- configured to deny access, by a bus (162, 170, 172, 174) external to the encryption/decryption unit, during data decryption and encryption operations, to the content of memory elements (206, 208) used to store data decrypted by the encryption/decryption unit (120).

2. Method of operation of an encryption/decryption unit (120) implementing an encryption/decryption algorithm, the method comprising the denial of access, by a bus (162, 170, 172, 174) external to the encryption/decryption unit (120), during data decryption and encryption operations, to the content of memory elements (206, 208) used to store portions of data decrypted by the encryption/decryption unit;
the access denial being implemented by a control unit (350) dedicated to the encryption/decryption unit (120).

3. Encryption/decryption unit according to claim 1, or method according to claim 2, wherein the control unit (350) is configured to implement a transfer of said decrypted data between a first memory element (206) and a second memory element (208) during said data decryption and encryption operations.

4. Encryption/decryption unit according to claim 1 or 3, or method according to claim 2 or 3, wherein the encryption/decryption unit (120) comprises a decryption unit (204) configured to decrypt, with said algorithm, blocks of first data,
the decrypted blocks being stored in the first memory element (206);
the first data being for example stored in a non-volatile memory.

5. Encryption/decryption unit or method according to claim 4 as dependent on claim 3, wherein said transfer is performed block by block or set of blocks by set of blocks, the blocks having for example a size of 64 or 128 bits.

6. Encryption/decryption unit or method according to claim 4 as dependent on claim 3, wherein said transfer is performed by using a bit stream.

7. Encryption/decryption unit or method according to any of claims 4 to 6, wherein the encryption/decryption unit (120) comprises an encryption unit (207) configured to encrypt, with said algorithm, all or part of the data contained in the second memory element (208);
the data encrypted by the encryption unit (207) being stored in a non-volatile memory (253).

8. Encryption/decryption unit or method according to claim 7, wherein:
- the decryption unit (204) uses, for decryption, a first encryption and decryption key; and
- the encryption unit (207) uses, for encryption, a second encryption and decryption key, different from the first key.

9. Encryption/decryption unit (120) or method according to any of claims 7 or 8 as dependent on claim 7, wherein the decryption unit (204) and the encryption unit (207) are part of a same computing unit (410) configured to be parameterized by the control unit (350) so that, in a first parameterizing mode, the computing unit (410) implements the decryption unit (204), and that, in a second parameterizing mode, the computing unit (410) implements the encryption unit (207).

10. Encryption/decryption unit (120) or method according to the foregoing claim, wherein the encryption/decryption unit (120) comprises a third and a fourth secure memory elements (404, 406), accessible by the control unit (350) only.

11. Encryption/decryption unit (120) or method according to the foregoing claim, wherein:
- the third memory element (404) comprises first parameters intended to be used by the control unit (350) to parameterize the computing unit (410) with the first parameterizing mode; and
- the fourth memory element (406) second parameters intended to be used by the control unit (350) to parameterize the computing unit (410) with the second parameterizing mode.

12. Encryption/decryption unit (120) or method according to claim 11, wherein the control unit (350) is configured to, at each iteration of the algorithm:
- parameterize the computing unit (410) with said first parameters so that data portions are decrypted and stored in the first memory element (206);
- then, transfer these decrypted data portions from the first memory element (206) to the second memory element (208); then
- update the first parameters;
- parameterize the computing unit (410) with said second parameters so that the decrypted data portions stored in the second memory element (208) are encrypted; then
- update the second parameters.

13. Encryption/decryption unit (120) or method according to claim 12, wherein said first and second parameters each comprise an identifier of the current round of the algorithm and a round key associated with said current round.

14. Encryption/decryption unit (120) or method according to any of claims 1 or 3 to 13, wherein:
- said algorithm is an algorithm of AES, RSA, ECC type, a symmetric or asymmetric key, SM4, GOST R 34.12-2015 algorithm, or a stream cipher algorithm; or
- the control unit (350) is entirely formed of hardware circuitry; or
- the control unit (350) is formed of an isolated computing unit and program; or
- the encryption/decryption unit (120) is securely accessible; or
- the control unit (350) is securely accessible; or
- the encryption/decryption unit (120) is implemented in a secure area of the ARM^{®} environment;
- said bus is coupled to a microprocessor (CPU), external to the encryption/decryption unit, for example via one or more control registers (160); or
- outside said decryption and encryption operations, the access, by said bus, to the content of said memory elements (206, 208) used to store data decrypted by the encryption/decryption unit (120), is authorized; or
- the encryption/decryption unit (120) is coupled to a microprocessor (CPU), external to the encryption/decryption unit and having said bus coupled thereto; or
- the encryption/decryption unit (120) is coupled to a bus master (CPU), external to the encryption/decryption unit and having said bus coupled thereto;
- the encryption/decryption unit (120) is arranged in a microcontroller (100) comprising a microprocessor (CPU), external to the encryption/decryption unit and having said bus coupled thereto;
- the encryption/decryption unit (120) is coupled to a microprocessor (CPU), external to the encryption/decryption unit and having said bus coupled thereto, for example via one or more control registers (160); or
- the encryption/decryption unit (120) is arranged in a microprocessor and coupled to a bus master (CPU), external to the encryption/decryption unit, and having said bus coupled thereto.

15. Microcontroller (100) comprising the encryption/decryption unit (120) according to any of claims 1 or 3 to 14; or
microprocessor (100) comprising the encryption/decryption unit (120) according to any of claims 1 or 3 to 14.
